# EUROPEAN PATENT APPLICATION

(11) **EP 4 354 355 A1**
(43) Date of publication of application: **17.04.2024**
(21) Application number: 23203082.5
(22) Date of filing: 11.10.2023
(51) Int. Cl.: G06N 3/0985, G06F 8/41, G06N 3/10, G06F 11/34

(54) **MULTI-OBJECTIVE AUTO TUNING FOR LAYER FUSION AND TENSOR TILING ON MULTI-LEVEL CACHE HIERARCHY**

(30) Priority: 11.10.2022 US 202263414912 P; 06.10.2023 US 202318377315
(71) Applicant: MediaTek Inc., Hsin-Chu 300 (TW)
(72) Inventor: HSU, Jui-Yang, 30078 Hsinchu City (TW); CHAN, Cheng-Sheng, 30078 Hsinchu City (TW); TSAI, Jen-Chieh, 30078 Hsinchu City (TW); LI, Huai-Ting, 30078 Hsinchu City (TW); KUO, Bo-Yu, 30078 Hsinchu City (TW); CHEN, Yen-Hao, 30078 Hsinchu City (TW); HUANG, Kai-Ling, 30078 Hsinchu City (TW); TSENG, Ping-Yuan, 30078 Hsinchu City (TW); TU, Tao, 30078 Hsinchu City (TW); HUNG, Sheng-Je, 30078 Hsinchu City (TW)
(74) Representative: Haseltine Lake Kempner LLP

(57) **Abstract**

A method of performing automatic tuning on a deep learning model includes: utilizing an instruction-based learned cost model to estimate a first type of operational performance metrics based on a tuned configuration of layer fusion and tensor tiling; utilizing statistical data gathered during a compilation process of the deep learning model to determine a second type of operational performance metrics based on the tuned configuration of layer fusion and tensor tiling; performing an auto-tuning process to obtain a plurality of optimal configurations based on the first type of platform metrics and the second type of platform metrics; and configure the deep learning model according to one of the plurality of optimal configurations.

## Description

This application claims the benefit of U.S. Provisional Application No. 63/414,912, filed on October 11th, 2022. The content of the application is incorporated herein by reference.

### Background

Recent advancements in deep learning (DL) have led to the widespread adoption of AI applications. To meet the performance expectations for DL, numerous deep learning accelerators (DLAs) have been proposed for DL inference on edge devices. For enhancing the performance of multi-core DLA architecture designs, the compiler needs to provide solutions that maintain high utilization for each DLA core and ensure balanced workloads among the DLA cores. In addition, model transformation at the graph level is typically employed to address parallelization issues and reduce DRAM access by incorporating layer fusion and tensor tiling on multi-level memory hierarchy. However, manually tuning to find optimal combinations of layer fusion and tensor tiling for a target DLA is labor-intensive. To repeat the tuning process for each for every model and scenario on multiple target DLAs with different hardware specifications, will result in a vast number of possible combinations. Enumerating all possible combinations of layer fusion and tensor tiling for the target DLAs becomes impractical, rendering conventional automatic grid searching infeasible.

### Summary

With this in mind, it is one object of the present invention to provide optimization-based auto-tuning method and architecture for deep learning models that involve optimizing operational performance metrics such as latency, power, memory footprint, DRAM access, and compile time, allowing it to balance trade-offs among different performance metrics and adapt to various scenarios.

According to one embodiment, a method of performing automatic tuning on a deep learning model is provided. The method comprises: utilizing an instruction-based learned cost model to estimate a first type of operational performance metrics based on a tuned configuration of layer fusion and tensor tiling; utilizing statistical data gathered during a compilation process of the deep learning model to determine a second type of operational performance metrics based on the tuned configuration of layer fusion and tensor tiling; performing an auto-tuning process to obtain a plurality of optimal configurations based on the first type of platform metrics and the second type of platform metrics; and configure the deep learning model according to one of the plurality of optimal configurations.

According to one embodiment, a system of performing automatic tuning on a deep learning model is provided. The system comprises: at least one processor; and one or more computer readable storage media storing computer-readable instructions. When executed by the at least one processor, the computer-readable instructions cause the system to perform operations of: utilizing an instruction-based learned cost model to estimate a first type of operational performance metrics based on a tuned configuration of layer fusion and tensor tiling; utilizing statistical data gathered during a compilation process of the deep learning model to determine a second type of operational performance metrics based on the tuned configuration of layer fusion and tensor tiling; performing an auto-tuning process to obtain a plurality of optimal configurations based on the first type of platform metrics and the second type of platform metrics; and configure the deep learning model according to one of the plurality of optimal configurations.

These and other objectives of the present invention will no doubt become obvious to those of ordinary skill in the art after reading the following detailed description of the preferred embodiment that is illustrated in the various figures and drawings.

### Brief Description of the Drawings

FIG. 1 illustrates a multi-objective optimization based on tuned layer fusion and tensor tiling configuration according to one embodiment of the present invention.
FIG. 2 illustrates a general representation of layers and tensors in a deep learning model at graph level.
FIG. 3 illustrates a representation for providing information of layer fusion and tensor tiling configuration to an auto-tuning process according to one embodiment of the present invention.
FIG. 4 illustrates architecture of an auto-tuning process according to one embodiment of the present invention.
FIG. 5 illustrates a method of performing an automatic tuning on a deep learning model.

### Detailed Description

In the following description, numerous specific details are set forth in order to provide a thorough understanding of the present embodiments. It will be apparent, however, to one having ordinary skill in the art that the specific detail need not be employed to practice the present embodiments. In other instances, well-known materials or methods have not been described in detail in order to avoid obscuring the present embodiments.

Reference throughout this specification to "one embodiment" or "an embodiment" means that a particular feature, structure or characteristic described in connection with the embodiment or example is included in at least one embodiment of the present embodiments. Thus, appearances of the phrases "in one embodiment" or "in an embodiment" in various places throughout this specification are not necessarily all referring to the same embodiment. Furthermore, the particular features, structures or characteristics may be combined in any suitable combinations and/or sub-combinations in one or more embodiments.

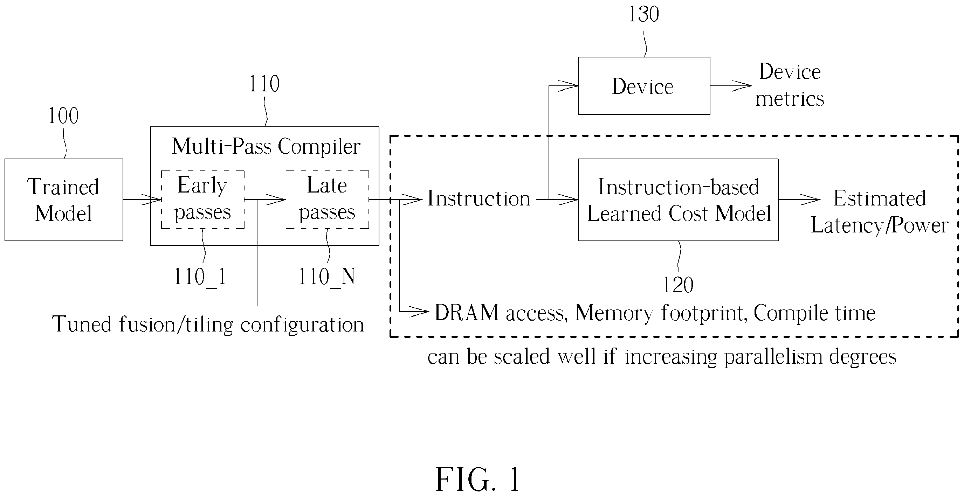

FIG. 1 illustrates a multi-objective optimization based on tuned layer fusion and tensor tiling configuration according to one embodiment of the present invention. As illustrated, a trained deep learning model 100 will be inputted to a multi-pass compiler 110. The multi-pass compiler 110 has multiple passes 110_1-110_N. One of the passes 110_1-110_N in the multi-pass compiler 110 involves an automatic tuning method of the present invention. Tuned layer fusion and tensor tiling configuration will be fed to another one of the passes 110_1-110_N of the multi-pass compiler 110 for optimizing the trained deep learning model 100. The multi-pass compiler 110 converts the trained deep learning model 110 into a set of instructions that can be efficiently executed on a target machine or hardware platform (e.g., deep learning accelerators (DLAs)). The set of instructions will be inputted to an offline-trained instruction-based learned cost model 120 to estimate operational performance metrics, such as latency (i.e., inference time of the trained deep learning model 100) and/or power consumption of execution of the trained deep learning model 100, to reflect benefits of the tuned layer fusion and tensor tiling configuration. Specifically, the instruction-based learned cost model 120 utilizes machine learning techniques, such as regression analysis and neural networks, to establish relationship between low-level instructions, latency, and power consumption. By modeling and learning features of low-level instructions, the instruction-based learned cost model 120 can predict latency and power consumption for a given configuration. Thus, the instruction-based learned cost model 120 of the present invention is utilized to estimate how low-level instructions converted from the trained deep learning model 100 impact latency and/or power consumption of execution of the trained deep learning model 100.

In addition, information regarding DRAM access (i.e., DRAM access count and/or DRAM usage) , memory footprint and/or compile time can be obtained from statistical data gathered during the compilation process of multi-pass compiler 110, to reflect benefits of the tuned layer fusion and tensor tiling configuration. Specifically, compilation statistics analyzes information gathered during the compilation process, which typically includes measurements related to model structure, memory usage, and performance. Operational performance metrics such as DRAM access, memory footprint, and compilation time can be directly obtained or approximated from the statistics generated by the multi-pass compiler 110. Obtaining information regarding DRAM access, memory footprint and/or compile time, as well as obtaining information regarding estimated latency and/or power consumption can be scaled effectively if increasing the degree of parallelism in computation or processing tasks.

Additionally, the set of instructions generated by the multi-pass compiler 110 can also be inputted to the specific hardware device 130, through an application programming interface (API), to collect device metrics, such as platform performance metrics, to perform auto-tuning on real hardware. If performing auto-tuning on real hardware, the parallelism is limited to the number of hardware. In view of this, the present invention is not limited to performing auto-tuning on real hardware in scope. According to various embodiments of the present invention, auto tuning on real hardware may not be necessary.

In the present invention, the auto-tuning method adjusts network structure of deep learning model to be adaptive to target DLAs by layer fusion and tensor tiling technique. Layer fusion and tensor tiling can effectively leverage the multi-level memory hierarchy to maximize resource utilization and performance. Specifically, layer fusion involves merging multiple consecutive deep learning layers into a single layer. This can reduce movement of data between different memory levels, thus decreasing memory access overhead and the number of memory accesses. Tensor tiling, on the other hand, breaks down large tensors into smaller blocks, which optimizes data layout and access patterns in memory, thereby enhancing high-speed cache utilization and minimizing memory bandwidth requirements.

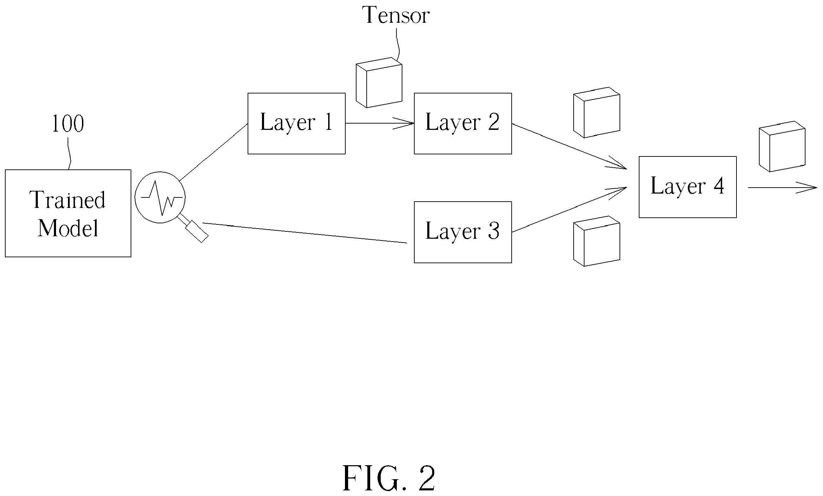

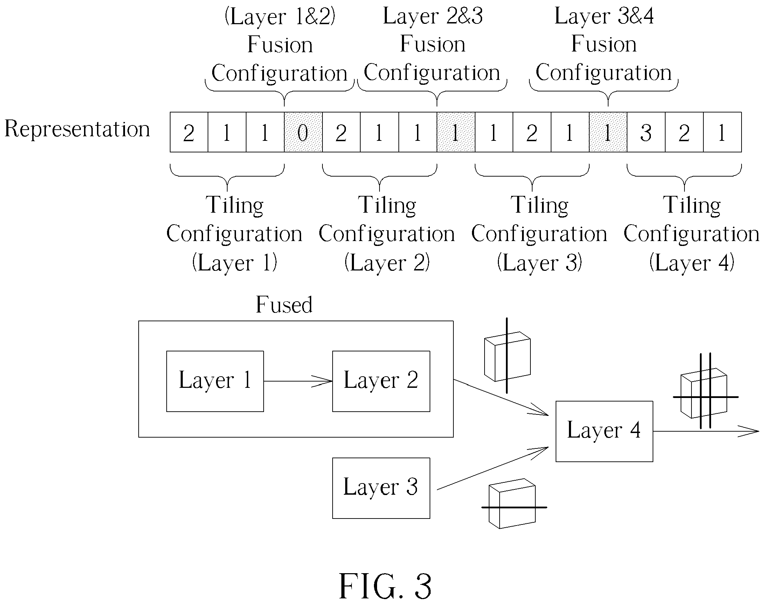

FIG. 2 illustrates a general representation of layers and tensors in a deep learning model at graph level. As illustrated, a layer in this computation graph serves as a node and a tensor is disposed between consecutive layers. FIG. 3 illustrates a representation for providing information of layer fusion and tensor tiling configuration to an auto-tuning process according to one embodiment of the present invention. As illustrated, the present invention utilizes a sequence of three numbers for representation of tiling configuration of a three-dimensional tensor (with H(height)-W(width)-C(channel) layer out) that corresponds to a certain layer. The first number of the sequence represents the number of tiles along the H (height) dimension, the second number of the sequence represents the number of tiles along the W (width) dimension, and the third number of the sequence represents the number of tiles along the C (channel) dimension. Between representations of tiling configurations, a single number is inserted for representation of layer fusion. The number "0" in the representation of layer fusion means preceding layers will be fused. The number "1" in the representation of layer fusion means preceding layers will not be fused. In addition, if two layers need to be fused, their corresponding tiling configurations need to be identical.

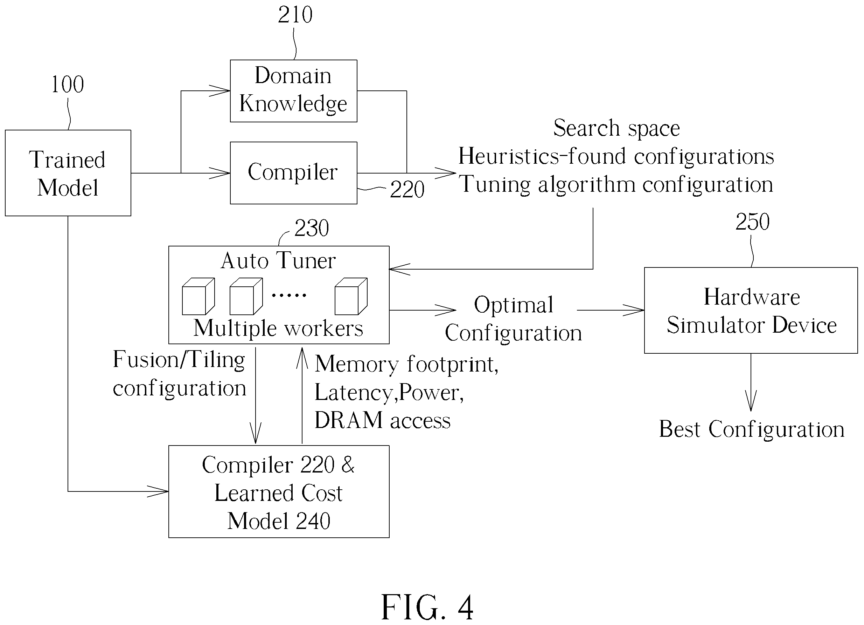

FIG. 4 illustrates architecture of an auto-tuning process according to one embodiment of the present invention. At first, the trained deep learning model 100 is inputted to a compiler 220 (which can be identical to the multi-pass compiler 110 of FIG. 1) and domain knowledge. Information regarding search space, heuristics-found configurations, and tuning algorithm configuration can be obtained from a compilation process performed by the compiler 220 and results provided by the algorithm-specific hardware 210. Specifically, the search space defines the set of all possible configurations that the auto-tuning process needs to explore, while excluding impossible and suboptimal configurations. The tuning algorithm configuration is determined and adjusted according to characteristics and architecture of the deep learning model 100 and target DLAs, which is utilized to configure the auto-tuning process. The Heuristics-found configurations provide a set of configurations selected based on certain rules of thumb or domain knowledge, which can serve as a starting point for the auto-tuning process, providing a basic performance reference.

Information regarding the search space, the heuristics-found configurations, and the tuning algorithm configuration will be provided to an auto-tuner 230 and configure it. The auto-tuner 230 is configured to perform the auto-tuning process and may include a plurality of sub-tuners (implemented on multiple workers) that share tuning parameters, which allows for the parallel execution of tasks (e.g., multiple different auto-tuning algorithms, such as genetic algorithms and reinforcement learning algorithms) in the auto-tuning process. These multiple workers are independent computational units (such as CPU cores, GPUs, or other processors) that operate simultaneously to perform different auto-tuning algorithms while sharing tuning parameters.

The auto-tuner 230 starts the tuning process based on the information regarding search space, heuristics-found configurations, and tuning algorithm configuration, and finds the optimal configurations according to information provided by the compiler 220 and a learned cost model 240, which may include operational performance metrics such as memory footprint, latency, power consumption, and/or DRAM access during the execution of the trained deep learning model 100, as well as the compile time of the trained deep learning model 100. Accordingly, the auto-tuner 230 generates tuned configurations of layer fusion and tensor tiling regarding the trained deep learning model 100.

The tuned configurations of layer fusion and tensor tiling for the trained deep learning model 100 are provided to the compiler 220 during the compilation process, allowing it to obtain information regarding operational performance metrics such as memory footprint, DRAM access, and/or compile time. On the other hand, instructions converted from the trained deep learning model 100 by the compiler 220 are inputted to the learned cost model 240 (which may be identical to the instruction-based learned cost model 120 of FIG. 1), enabling the estimation of operational performance metrics such as latency and/or power consumption.

The auto-tuner 230 iteratively tunes configurations of layer fusion and tensor tiling based on obtained operational performance metrics to ultimately find the optimal configurations. In one embodiment, the optimal configurations found by the auto-tuner 230 may be further provided to a hardware simulator device 250 (which can be a hardware platform or a high-precision model) to identify a best configuration from the optimal configurations. The purpose of the hardware simulator device 250 is to simulate performance metrics for the found optimal configurations, on the actual hardware where the trained deep learning model 100 is intended to be deployed. By evaluating these optimal configurations on the hardware simulator device 250, it is possible to determine the best configuration in terms of performance within the simulated hardware environment.

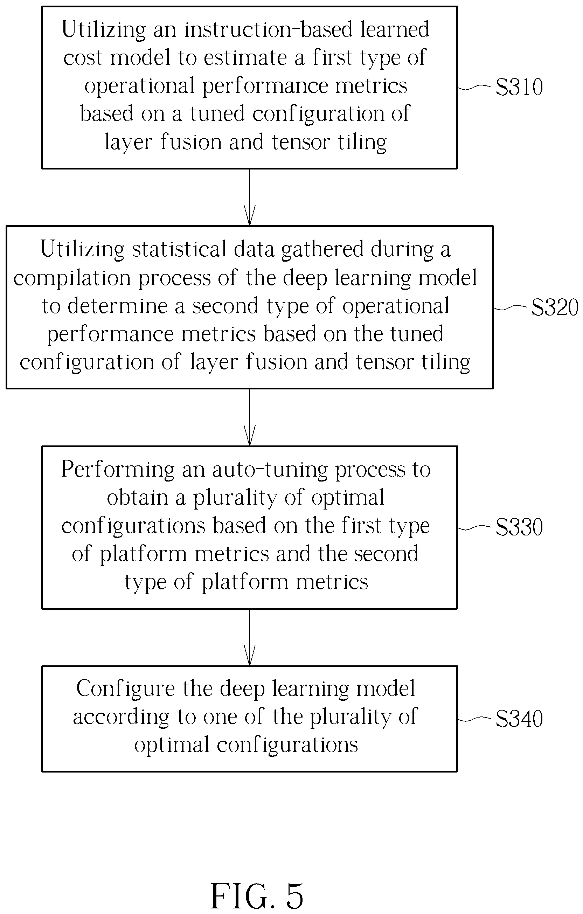

FIG. 5 illustrates a method of performing an automatic tuning on a deep learning model. As shown in the figure, the method of the present invention includes the following simplified flow:
Step S310: utilizing an instruction-based learned cost model to estimate a first type of operational performance metrics based on a tuned configuration of layer fusion and tensor tiling;
Step S320: utilizing statistical data gathered during a compilation process of the deep learning model to determine a second type of operational performance metrics based on the tuned configuration of layer fusion and tensor tiling;
Step S330: performing an auto-tuning process to obtain a plurality of optimal configurations based on the first type of platform metrics and the second type of platform metrics; and
Step S340: configure the deep learning model according to one of the plurality of optimal configurations.

Since principles and specific details of the foregoing steps have been explained in detail through the above embodiments, further descriptions will not be repeated here. It should be noted that the above flow may be possible, by adding other extra steps or making appropriate modifications and adjustments, to better improve flexibility and further improve efficiency of tuning the deep learning model.

In conclusion, the present invention focuses on the auto-tuning of deep learning models, aiming for multi-objective optimization of operational performance metrics of deep learning models. The multi-objective optimization includes reducing inference time, lowering power consumption, minimizing the usage of dynamic random-access memory (DRAM), maximizing the utilization of high-speed cache in deep learning accelerators, and balancing core scheduling for multi-core DLAs. Furthermore, the present invention leverages layer fusion and tensor tiling to exploit multi-level memory hierarchy of target DLAs, thereby maximizing resource utilization and performance.

Embodiments in accordance with the present embodiments can be implemented as an apparatus, method, or computer program product. Accordingly, the present embodiments may take the form of an entirely hardware embodiment, an entirely software embodiment, or an embodiment combining software and hardware aspects that can all generally be referred to herein as a "module" or "system." Furthermore, the present embodiments may take the form of a computer program product embodied in any tangible medium of expression having computer-usable program code embodied in the medium. In terms of hardware, the present invention can be accomplished by applying any of the following technologies or related combinations: an individual operation logic with logic gates capable of performing logic functions according to data signals, and an application specific integrated circuit (ASIC), a programmable gate array (PGA) or a field programmable gate array (FPGA) with a suitable combinational logic.

The flowchart and block diagrams in the flow diagrams illustrate the architecture, functionality, and operation of possible implementations of systems, methods, and computer program products according to various embodiments of the present embodiments. In this regard, each block in the flowchart or block diagrams may represent a module, segment, or portion of code, which comprises one or more executable instructions for implementing the specified logical function(s). It is also noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions. These computer program instructions can be stored in a computer-readable medium that directs a computer or other programmable data processing apparatus to function in a particular manner, such that the instructions stored in the computer-readable medium produce an article of manufacture including instruction means which implement the function/act specified in the flowchart and/or block diagram block or blocks.

Those skilled in the art will readily observe that numerous modifications and alterations of the device and method may be made while retaining the teachings of the invention. Accordingly, the above disclosure should be construed as limited only by the metes and bounds of the appended claims.

The present application may also be defined by the following numbered clauses.
1. A method of performing automatic tuning on a deep learning model, comprising:
   utilizing an instruction-based learned cost model to estimate a first type of operational performance metrics based on a tuned configuration of layer fusion and tensor tiling;
   utilizing statistical data gathered during a compilation process of the deep learning model to determine a second type of operational performance metrics based on the tuned configuration of layer fusion and tensor tiling;
   performing an auto-tuning process to obtain a plurality of optimal configurations based on the first type of platform metrics and the second type of platform metrics; and
   configure the deep learning model according to one of the plurality of optimal configurations.
2. The method of clause 1, further comprising:
   applying the plurality of optimal configurations to a hardware simulation device to find a best configuration; and
   configure the deep learning model according to the best configuration.
3. The method of clause 1, further comprising:
   performing the auto-tuning process to generate the tuned configuration of layer fusion and tensor tiling; and
   performing the compilation process according to the tuned configuration of layer fusion and tensor tiling.
4. The method of clause 1, further comprising:
   performing the compilation process to convert the deep learning model into a set of instructions; and
   inputting the set of instructions to the instruction-based learned cost model to estimate the first type of operational performance metrics.
5. The method of clause 1, further comprising:
   obtaining information regarding at least one of a search space, heuristics-found configurations, and a tuning algorithm configuration; and
   performing the auto-tuning process based on the information regarding the at least one of the search space, the heuristics-found configurations, and the tuning algorithm configuration.
6. The method of clause 1, wherein the first type of operational performance metrics comprises at least one of latency and power consumption regarding execution of the deep learning model.
7. The method of clause 1, wherein the second type of operational performance metrics comprises at least one of dynamic random-access memory (DRAM) access and memory footprint regarding execution of the deep learning model and a compile time of the compilation process of the deep learning model.
8. The method of clause 1, wherein the step of performing the auto-tuning process comprises:
   utilizing an auto-tuner including a plurality of sub-tuners with shared tuning parameters to perform tasks of the auto-tuning process in parallel.
9. The method of clause 1, further comprising:
   representing the tuned configuration of layer fusion and tensor tiling in a form of a combination of a number sequence and a single number, wherein the number sequence represents a tiling configuration corresponding to a layer and the single number represents a fusion configuration corresponding to preceding layers.
10. A system for automatic tuning on a deep learning model, comprising:
   at least one processor; and
   one or more computer readable storage media storing computer-readable instructions that when executed by the at least one processor, cause the system to perform operations of:
      utilizing an instruction-based learned cost model to estimate a first type of operational performance metrics based on a tuned configuration of layer fusion and tensor tiling;
      utilizing statistical data gathered during a compilation process of the deep learning model to determine a second type of operational performance metrics based on the tuned configuration of layer fusion and tensor tiling;
      performing an auto-tuning process to obtain a plurality of optimal configurations based on the first type of platform metrics and the second type of platform metrics; and
      configure the deep learning model according to one of the plurality of optimal configurations.
11. The system of clause 10, wherein when executed by the at least one processor, the computer-readable instructions cause the system to perform operation of:
   applying the plurality of optimal configurations to a hardware simulation device to find a best configuration; and
   configure the deep learning model according to the best configuration.
12. The system of clause 10, wherein when executed by the at least one processor, the computer-readable instructions cause the system to perform operation of:
   performing the auto-tuning process to generate the tuned configuration of layer fusion and tensor tiling; and
   performing the compilation process according to the tuned configuration of layer fusion and tensor tiling.
13. The system of clause 10, wherein when the computer-readable instructions are executed by the at least one processor, the system performs operation of:
   performing the compilation process convert the deep learning model into a set of instructions; and
   inputting the set of instructions to the instruction-based learned cost model to estimate the first type of operational performance metrics.
14. The system of clause 10, wherein when executed by the at least one processor, the computer-readable instructions cause the system to perform operation of:
   obtaining information regarding at least one of a search space, heuristics-found configurations, and a tuning algorithm configuration; and
   performing the auto-tuning process based on the information regarding the at least one of the search space, the heuristics-found configurations, and the tuning algorithm configuration.
15. The system of clause 10, wherein the first type of operational performance metrics comprises at least one of latency and power consumption regarding execution of the deep learning model.
16. The system of clause 10, wherein the second type of operational performance metrics comprises at least one of dynamic random-access memory (DRAM) access and memory footprint regarding execution of the deep learning model and a compile time of the compilation process of the deep learning model.
17. The system of clause 10, wherein when executed by the at least one processor, the computer-readable instructions cause the system to perform operation of:
   utilizing an auto-tuner including a plurality of sub-tuners with shared tuning parameters to perform tasks of the auto-tuning process in parallel.
18. The system of clause 10, wherein when executed by the at least one processor, the computer-readable instructions cause the system to perform operation of:
   representing the tuned configuration of layer fusion and tensor tiling in a form of a combination of a number sequence and a single number, wherein the number sequence represents a tiling configuration corresponding to a layer and the single number represents a fusion configuration corresponding to preceding layers.

## Claims

1. A method of performing automatic tuning on a deep learning model (100, 110), comprising:
utilizing an instruction-based learned cost model (120) to estimate a first type of operational performance metrics based on a tuned configuration of layer fusion and tensor tiling;
utilizing statistical data gathered during a compilation process of the deep learning model (100, 110)to determine a second type of operational performance metrics based on the tuned configuration of layer fusion and tensor tiling;
performing an auto-tuning process to obtain a plurality of optimal configurations based on the first type of platform metrics and the second type of platform metrics; and
configure the deep learning model (100, 110) according to one of the plurality of optimal configurations.

2. The method of claim 1, further comprising:
applying the plurality of optimal configurations to a hardware simulation device to find a best configuration; and
configure the deep learning model (100, 110) according to the best configuration.

3. The method of claim 1 or claim 2, further comprising:
performing the auto-tuning process to generate the tuned configuration of layer fusion and tensor tiling; and
performing the compilation process according to the tuned configuration of layer fusion and tensor tiling.

4. The method of any one of the preceding claims, further comprising:
performing the compilation process to convert the deep learning model (100, 110) into a set of instructions; and
inputting the set of instructions to the instruction-based learned cost model (120) to estimate the first type of operational performance metrics.

5. The method of any one of the preceding claims, further comprising:
obtaining information regarding at least one of a search space, heuristics-found configurations, and a tuning algorithm configuration; and
performing the auto-tuning process based on the information regarding the at least one of the search space, the heuristics-found configurations, and the tuning algorithm configuration.

6. The method of any one of the preceding claims, wherein the first type of operational performance metrics comprises at least one of latency and power consumption regarding execution of the deep learning model(100, 110); and/or
wherein the second type of operational performance metrics comprises at least one of dynamic random-access memory, DRAM, access and memory footprint regarding execution of the deep learning model (100, 110) and a compile time of the compilation process of the deep learning model (100, 110).

7. The method of any one of the preceding claims, wherein the step of performing the auto-tuning process comprises:
utilizing an auto-tuner (230) including a plurality of sub-tuners with shared tuning parameters to perform tasks of the auto-tuning process in parallel.

8. The method of any one of the preceding claims, further comprising:
representing the tuned configuration of layer fusion and tensor tiling in a form of a combination of a number sequence and a single number, wherein the number sequence represents a tiling configuration corresponding to a layer and the single number represents a fusion configuration corresponding to preceding layers.

9. A system for automatic tuning on a deep learning model, (100, 110) comprising:
at least one processor; and
one or more computer readable storage media storing computer-readable instructions that when executed by the at least one processor, cause the system to perform operations of:
utilizing an instruction-based learned cost model (120) to estimate a first type of operational performance metrics based on a tuned configuration of layer fusion and tensor tiling;
utilizing statistical data gathered during a compilation process of the deep learning model (100, 110) to determine a second type of operational performance metrics based on the tuned configuration of layer fusion and tensor tiling;
performing an auto-tuning process to obtain a plurality of optimal configurations based on the first type of platform metrics and the second type of platform metrics; and
configure the deep learning model (100, 110) according to one of the plurality of optimal configurations.

10. The system of claim 9, wherein when executed by the at least one processor, the computer-readable instructions cause the system to perform operation of:
applying the plurality of optimal configurations to a hardware simulation device to find a best configuration; and
configure the deep learning model (100, 110) according to the best configuration; and/or
wherein when executed by the at least one processor, the computer-readable instructions cause the system to perform operation of:
performing the auto-tuning process to generate the tuned configuration of layer fusion and tensor tiling; and
performing the compilation process according to the tuned configuration of layer fusion and tensor tiling.

11. The system of any one of the preceding claims, wherein when the computer-readable instructions are executed by the at least one processor, the system performs operation of:
performing the compilation process convert the deep learning model (100, 110) into a set of instructions; and
inputting the set of instructions to the instruction-based learned cost model (120) to estimate the first type of operational performance metrics.

12. The system of any one of the preceding claims, wherein when executed by the at least one processor, the computer-readable instructions cause the system to perform operation of:
obtaining information regarding at least one of a search space, heuristics-found configurations, and a tuning algorithm configuration; and
performing the auto-tuning process based on the information regarding the at least one of the search space, the heuristics-found configurations, and the tuning algorithm configuration.

13. The system of any one of the preceding claims, wherein the first type of operational performance metrics comprises at least one of latency and power consumption regarding execution of the deep learning model (100, 110); and/or
wherein the second type of operational performance metrics comprises at least one of dynamic random-access memory, DRAM, access and memory footprint regarding execution of the deep learning model (100, 110) and a compile time of the compilation process of the deep learning model(100, 110).

14. The system of any one of the preceding claims, wherein when executed by the at least one processor, the computer-readable instructions cause the system to perform operation of:
utilizing an auto-tuner (230) including a plurality of sub-tuners with shared tuning parameters to perform tasks of the auto-tuning process in parallel.

15. The system of any one of the preceding claims, wherein when executed by the at least one processor, the computer-readable instructions cause the system to perform operation of:
representing the tuned configuration of layer fusion and tensor tiling in a form of a combination of a number sequence and a single number, wherein the number sequence represents a tiling configuration corresponding to a layer and the single number represents a fusion configuration corresponding to preceding layers.
